# EUROPÄISCHE PATENTANMELDUNG

(11) **EP 0 971 524 A2**
(43) Veröffentlichungstag der Anmeldung: **12.01.2000**
(21) Anmeldenummer: 99104261.5
(22) Anmeldetag: 03.03.1999
(51) Int. Cl.: H04M 11/02

(54) **Türsprechanlage mit einer Türstation und mehreren Wohnungssprechstellen**

(30) Priorität: 17.04.1998 DE 19817161
(71) Anmelder: Ritto - Werk Loh GmbH & Co. KG, 35708 Haiger (DE)
(72) Erfinder: Heppner, Manfred, 35708 Haiger (DE)
(74) Vertreter: Fleck, Hermann-Josef, Dr.-Ing.

(57) **Zusammenfassung**

Die Erfindung betrifft eine Türsprechanlage mit einer Türstation und mehreren, über eine Busleitung mit dieser verbindbaren Wohnungssprechstellen, bei der die Türstation und die Wohnungssprechstellen von einer Gleichspannung gespeist sind und bei der die Sprachsignale und die als Wechselstrom-Codesignale gebildeten Klingel- und Betriebssignale über die Busleitung übertragbar sind. Eine eindeutige Entkopplung von Gleichstromspeisung und Signalisierung wird bei einfachstem Aufbau dadurch erreicht, daß für die Übertragung der Sprache und der Klingel- und Betriebssignale die Türstation (TST) und alle Wohnungssprechstellen (WSPST1 bis WSPSTn) über jeweils ein Wechselstrom-Koppelglied nur wechselstrommäßig mit der einzigen Busleitung (BL) verbunden sind und daß der Türstation (TST) und den Wohnungssprechstellen (WSPST1 bis WSPSTn) jeweils eine individuelle Gleichstromversorgung zugeordnet ist, die die Gleichstromspeisung der Einrichtungen der Türstation (TST) oder der Wohnungssprechstelle (WSPST1, WSPSTn) übernimmt.

## Beschreibung

Die Erfindung betrifft eine Türsprechanlage mit einer Türstation und mehreren, über eine Busleitung mit dieser verbindbaren Wohnungssprechstellen, bei der die Türstation und die Wohnungssprechstellen von einer Gleichspannung gespeist sind und bei der die Sprachsignale und die als Wechselstrom-Codesignale gebildeten Klingel- und Betriebssignale über die Busleitung übertragbar sind.

Türsprechanlagen mit einer Busleitung zur Übertragung der Sprache und der Betriebssignale werden mehr und mehr eingesetzt, da sie eine wesentliche Vereinfachung in der Verdrahtung, insbesondere eine Reduzierung der Verbindungsleitungen, bringen. Dabei bereitet die Gleichstromspeisung der Türstation und der Wohnungssprechstellen noch Schwierigkeiten. Wird vorgesehen, die Türstation und die Wohnungssprechstellen auch über die Busleitung vorzunehmen, dann nehmen die Schwierigkeiten noch zu.

Es ist eine Türsprechanlage bekannt, bei der für die Sprachübertragung und für die Signalübertragung getrennte Busleitungen verwendet werden, um eine gegenseitige Beeinflussung zu vermeiden. Dies bedingt zwangsläufig wieder einen erhöhten Leitungsaufwand, insbesondere dann, wenn auch noch eine zentrale Gleichstromversorgung eingesetzt wird und die Speisung der Türstation und der Wohnungssprechstellen über eine zusätzliche Versorgungsleitung erfolgt.

Es ist auch eine Türsprechanlage bekannt, bei der die Signalübertragung und die Gleichstromspeisung über die Busleitung erfolgt, über die auch die Sprachübertragung vorgenommen wird. Dabei muß die Sprachübertragung eindeutig von dem Gleichstromkreis entkoppelt werden. Da die Signalübertragung durch Pegeländerung auf der Busleitung erfolgt, beeinflußt die Gleichstromspeisung die Signalgabe. Die Spannung der Gleichstromspeisung auf der Busleitung ist abhängig von der Anzahl der angeschalteten Wohnungssprechstellen und schränkt die Pegeländerung, die zur Signalabgabe ausgenützt werden kann, entsprechend ein. Will man die Anzahl der anzuschaltenden Wohnungssprechstellen nicht zu sehr begrenzen, müssen Gruppen von Wohnungssprechstellen gebildet werden, denen eigene Speisestromkreise zuzuordnen sind. Dies bedeutet wiederum einen erhöhten Verdrahtungsaufwand.

Es ist Aufgabe der Erfindung, eine Türsprechanlage der eingangs erwähnten Art zu schaffen, die nur eine einzige Busleitung erfordert und dennoch eine eindeutige Trennung von Signalübertragung und Gleichstromspeisung aufweist und in der Anzahl der Wohnungssprechstellen nicht begrenzt ist.

Diese Aufgabe wird nach der Erfindung dadurch gelöst, daß für die Übertragung der Sprache und der Klingel- und Betriebssignale die Türstation und alle Wohnungssprechstellen über jeweils ein Wechselstrom-Koppelglied nur wechselstrommäßig mit der einzigen Busleitung verbunden sind und daß der Türstation und den Wohnungssprechstellen jeweils eine individuelle Gleichstromversorgung zugeordnet ist, die die Gleichstromspeisung der Einrichtungen der Türstation oder der Wohnungssprechstelle übernimmt.

Bei dieser Ausgestaltung dient die Busleitung nur der Übertragung der Sprache und der Betriebssignale. Die Gleichstromspeisung wird von den individuell zugeordneten Gleichstromversorgungen übernommen. Der Aufwand für diese Gleichstromversorgungen ist gering, da die Einrichtungen der Türstation und der Wohnungssprechstellen nur kleinen Leistungsbedarf haben und zudem von den Betriebssignalen der Türsprechanlage ein- und ausgeschaltet werden können.

Die Wechselstromkopplung der Türstation und der Wohnungssprechstellen mit der Busleitung können in einfacher Weise Koppelkondensatoren übernehmen. Die Gleichstromversorgung umfaßt nach einer Ausgestaltung einen Netztransformator mit einer nachgeschalteten Gleichrichterbrücke. Die von der Gleichrichterbrücke abgegebene Gleichspannung kann dabei mit einem Kondensator geglättet werden.

Ist nach einer Ausgestaltung vorgesehen, daß in jeder Wohnungssprechstelle der Sprech-Hörkreis über einen Schalter und den Koppelkondensator an die Busleitung anschaltbar ist, während die Signal-Sende- und Signal-Empfangseinrichtungen über den Koppelkondensator direkt mit der Busleitung verbunden sind, und daß in der Türstation der Sprech-Hörkreis über einen Schalter und den Koppelkondensator an die Busleitung anschaltbar ist, während die Signal-Sende- und Signal-Empfangseinrichtungen über den Koppelkondensator direkt an der Busleitung angeschaltet sind, dann läßt sich über diese Schalter in einfacher Weise Sprachübertragung und Signalübertragung zeitlich voneinander trennen.

Die Anwahl einer Wohnungssprechstelle erfolgt nach einer Ausgestaltung in der Weise, daß beim Betätigen einer Klingeltaste der Türstation die Signal-Sendeeinrichtung ein Klingelsignal aussendet, das nur in der zugeordneten Wohnungssprechstelle aufgenommen und zur Abgabe eines akustischen Rufsignals ausgewertet wird.

Die Herstellung einer Sprechverbindung zwischen der gerufenen Wohnungssprechstelle und der Türstation geschieht nach einer Ausgestaltung dadurch, daß beim Melden des gerufenen Teilnehmers (Abheben des Handapparates) die Signalsendeeinrichtung der gerufenen Wohnungssprechstelle ein Meldesignal zur Türstation sendet, daß die Signal-Empfangseinrichtung der Türstation das Meldesignal aufnimmt, auswertet und über den Schalter den Sprech-Hörkreis mit der Busleitung verbindet und bis zum Gesprächsende aufrechthält und daß beim Melden der Wohnungssprechstelle der zugeordnete Schalter den Sprech-Hörkreis durchschaltet.

Die Abschaltung der Sprechverbindung erfolgt dadurch, daß beim Beenden des Gespräches durch den gerufenen Teilnehmer (Auflegen des Handapparates) der Schalter auslöst und die Signal-Sendeeinrichtung der auslösenden Wohnungssprechstelle ein Abschaltesignal zur Türstation sendet und daß die Signal-Empfangseinrichtung der Türstation das Abschaltesignal aufnimmt, auswertet und über den Schalter den Sprech-Hörkreis der Türstation von der Busleitung abschaltet.

Die Türöffnerfunktion der Türsprechanlage wird dadurch gelöst, daß jeder Wohnungssprechstelle eine Türöffnertaste zugeordnet ist, mit der ein Türöffnersignal zur Türstation aussendbar ist und daß beim Empfang des Türöffnersignals die Signal-Empfangseinrichtung der Türstation über einen Türöffnerschalter den Türöffner für die Dauer des Türöffnersignals ansteuert, wobei aus Sicherheitsgründen vorgesehen werden kann, daß die Aussendung eines Türöffnersignals nur von einer angerufenen Wohnungssprechstelle aus einleitbar ist.

Für die Signalgabe zwischen Türstation und Wohnungssprechstellen ist vorgesehen, daß die Signal-Sende- und Signal-Empfangseinrichtungen der Wohnungssprechstelle einen Mikrocomputer, einen Signalsender und einen Signalempfänger umfassen und daß die Signal-Sende- und Signal-Empfangseinrichtungen der Türstation einen Mikrocomputer, einen Signalsender und Signalempfänger aufweisen.

Der Leistungsbedarf der Türsprechanlage läßt sich nach einer Weiterbildung dadurch reduzieren, daß im Ruhezustand der Wohnungssprechstelle nur die Signal-Empfangseinrichtung mit dem Mikrocomputer an der Gleichstromversorgung angeschaltet ist, während die Signal-Sendeeinrichtung beim Aussenden eines Betriebssignals (Meldesignal, Abschaltesignal, Türöffnersignal) und der Sprech-Hörkreis vom Aussenden des Meldesignals bis zur Abgabe des Abschaltesignals mit Gleichstrom gespeist werden, sowie dadurch, daß im Ruhezustand der Türstation die Gleichstromversorgung für den Sprech-Hörkreis und die Signal-Sendeeinrichtung und die Signal-Empfangseinrichtung sowie den Mikrocomputer abgeschaltet ist, während mit der Betätigung einer Klingeltaste zumindest der Mikrocomputer, die Signal-Sendeeinrichtung auch die Signal-Empfangseinrichtung mit Gleichstrom gespeist werden.

Die Erfindung wird anhand eines in den Zeichnungen als Blockschaltbild dargestellten Ausführungsbeispiels näher erläutert. Es zeigen:
- Fig. 1: die einzige Busleitung mit zwei angeschalteten Wohnungssprechstellen und
- Fig. 2: eine mit dieser Busleitung verbundene Türstation.

Die Türsprechanlage nach der Erfindung weist nur eine einzige Busleitung BL auf, an der alle Wohnungssprechstellen WSPST1 bis WSPSTn sowie die Türstation TST angeschaltet sind. Dabei ist die Ader a nur wechselstrommäßig mit den Wohnungssprechstellen WSPST1 bis WSPSTn und der Türstation TST verbunden, während die Ader b geerdet, d.h. auf dem Bezugspotential der Türsprechanlage liegt.

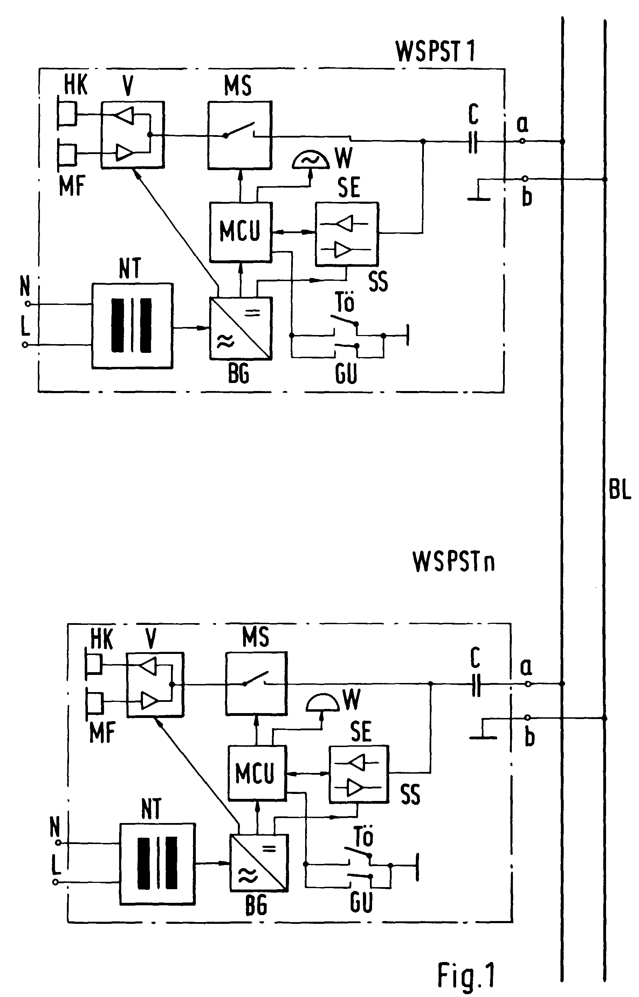

In den Wohnungsprechstellen WSPST1 bis WSPSTn ist, wie Fig. 1 zeigt, jeweils ein Sprech-Hörkreis vorgesehen, der ein Mikrofon MF, eine Hörkapsel HK und den Zweirichtungsverstärker V umfaßt. Dieser Sprech-Hörkreis ist über einen Schalter MS und einen Koppelkondensator C mit der Ader a der Busleitung BL verbunden. Der Sprechweg ist nur einadrig gezeichnet, da die andere Ader stets geerdet ist. Die Wohnungssprechstelle WSPST1 bis WSPSTn weist eine individuelle Gleichstromversorgung auf, die einen Netztransformator mit nachgeschalteter Gleichrichterbrücke BG umfaßt. Der Gleichstromausgang ist geglättet und gibt die auf die Einrichtungen der Wohnungssprechstelle WSPST1 bis WSPSTn angepaßte Gleichspannung ab.

Für die Signalgabe ist neben der Signal-Sendeeinrichtung SS und der Signal-Empfangseinrichtung SE ein Mikrocomputer MCU vorgesehen, der den Schalter MS und ein akustisches Ruforgan W steuert. Der Mikrocomputer MCU ist durch einen Türöffnerkontakt Tö und einen Kontakt GU ansteuerbar. Der als Gabelumschalter ausgebildete Kontakt GU ist beim Abheben und Wiederauflegen des Handapparates der Wohnungssprechstelle WSPST1 bis WSPSTn betätigbar, d.h. ein- bzw. ausschaltbar.

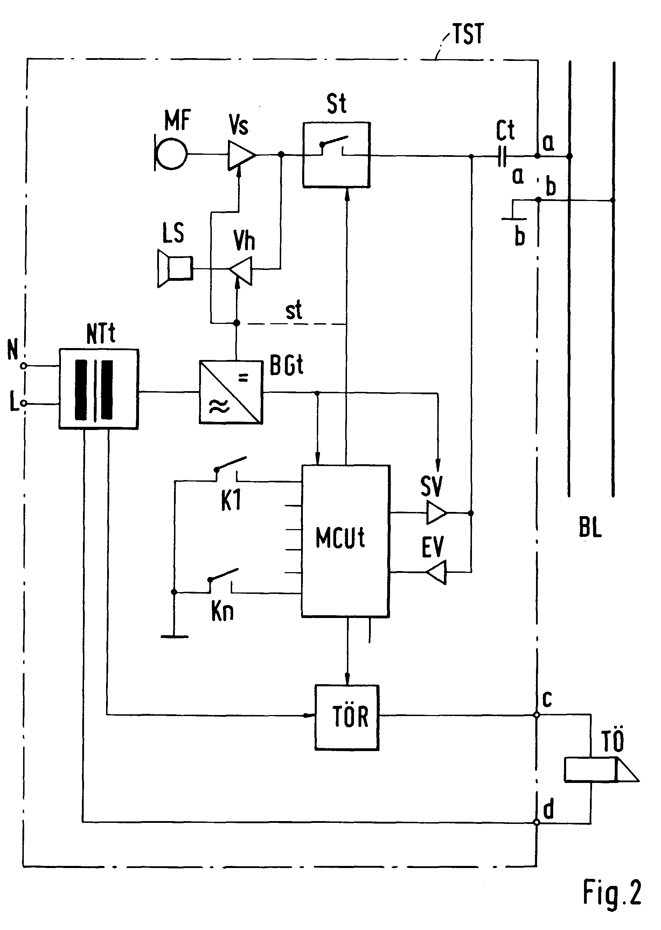

In der Türstation TST ist der Sprech-Hörkreis durch ein Mikrofon MF und einen Sprechverstärker Vs sowie einen Lautsprecher LS mit Hörverstärker Vh gebildet, wie Fig. 2 zeigt. Dieser Sprech-Hörkreis ist über einen Schalter St und einen Koppelkondensator Ct mit der Ader a der Busleitung BL verbunden. Die Gleichstromspeisung übernimmt eine der Türstation TST zugeordnete Gleichstromversorgung aus Netztransformator NTt und Gleichrichterbrücke BGt, die auch die für die Signalisierung benötigten Einrichtungen, Mikrocomputer MCUt, Signal-Sendeeinrichtung SV und Signal-Empfangseinrichtung EV speist.

Der Mikrocomputer MCUt wird von den Klingeltasten K1 bis Kn angesteuert und legt die zugeordneten Rufsignale für die Wohnungssprechstellen WSPST1 bis WSPSTn fest. Geht ein Türöffnersignal ein, dann wird es von der Signal-Empfangseinrichtung EV aufgenommen und an den Mikrocomputer MCUt weitergeleitet. Der Mikrocomputer MCUt steuert einen Türöffnerschalter TÖR, der den vom Netztransformator NTt gelieferten Wechselstromkreis für den Türöffner TÖ schließt und vorzugsweise für die Dauer des Türöffnersignals geschlossen hält.

Die Funktion der Türsprechanlage läuft wie folgt ab:
Die Gleichstromversorgung der Türstation TST wird mit der Ansteuerung des Mikrocomputers MCUt durch eine Klingeltaste K1 bis Kn zumindest für die für die Signalisierung erforderlichen Einrichtungen - Signal-Sendeeinrichtung SV, Signal-Empfangseinrichtung SE und Mikrocomputer MCUt - aktiv. Das der betätigten Klingeltaste, z.B. K1, zugeordnete Rufsignal wird als Wechselstrom-Codezeichen über die Signal-Sendeeinrichtung SV und den Koppelkondensator Ct auf die Busleitung BL gegeben. Nur in der Wohnungssprechstelle WSPST1 wird das Rufsignal als zugehörig anerkannt, aufgenommen und an den Mikrocomputer MCU weitergeleitet. Die Signal-Empfangseinrichtungen SE und die Mikrocomputer MCU der Wohnungssprechstellen WSPST1 bis WSPSTn sind daher auch im Ruhezustand an der Gleichstromversorgung angeschaltet. In der gerufenen Wohnungssprechstelle WSPST1 löst der Mikrocomputer MCU ein akustisches Rufsignal aus, wozu ein akustisches Ruforgan W angesteuert wird.

Meldet sich der gerufene Teilnehmer durch Abheben des Handapparates, dann wird der Gabelumschaltekontakt GU geschlossen. Der Mikrocomputer MCU gibt ein Meldesignal über die Signal-Sendeeinrichtung SS und den Koppelkondensator C auf die Busleitung BL, das in der Türstation TST aufgenommen und über die Signal-Empfangseinrichtung EV und den Mikrocomputer MCUt zur Einschaltung des Schalters St und damit zur Anschaltung des Sprech-Hörkreises verwendet wird. Da auch in der gerufenen Wohnungssprechstelle WSPST1 mit dem Melden des Teilnehmers der Schalter MS geschlossen wird, ist eine Sprechverbindung zwischen der gerufenen Wohnungssprechstelle WSPST1 und der Türstation TST hergestellt, die solange aufrecht erhalten wird, bis der gerufene Teilnehmer seinen Handapparat wieder auflegt. Dabei wird der Gabelumschaltekontakt GU wieder geöffnet. Der Mikrocomputer MCU löst den Schalter MS aus und veranlaßt die Aussendung eines Abschaltesignals zur Türstation TST. Das Abschaltesignal steuert den Schalter St der Türstation TST in den Ausschaltzustand. Damit sind die Sprech-Hörkreise der gerufenen Wohnungssprechstelle WSPST1 und der Türstation TST von der Busleitung BL getrennt und kehren in ihren Ruhezustand zurück.

Damit nur die gerufene Wohnungssprechstelle WSPSt1 den Türöffner TÖ steuern kann, ist der Türöffnerkontakt Tö nur in der gerufenen Wohnungssprechstelle wirksam, was der Mikrocomputer MCU leicht feststellen kann, da er das zugeordnete Rufsignal empfangen hat. Wie Fig. 2 zeigt, kann der Schalter St der Türstation TST auch die Gleichstromversorgung an den Sprech-Hörkreis an- und abschalten. Dasselbe gilt auch für den Schalter MS und den Sprech-Hörkreis der Wohnungssprechstellen WSPST1 bis WSPSTn.

Die Bildung, die Aussendung und der Empfang der Betriebssignale kann auch mittels anderer Einrichtungen erfolgen. Auch die Bildung der Wechselstrom-Codezeichen kann auf die unterschiedlichste Art vorgenommen werden. Außerdem lassen sich mit entsprechenden Betriebssignalen weitere Funktionen in die Türsprechanlage einführen.

## Patentansprüche

1. Türsprechanlage mit einer Türstation und mehreren, über eine Busleitung mit dieser verbindbaren Wohnungssprechstellen, bei der die Türstation und die Wohnungssprechstellen von einer Gleichspannung gespeist sind und bei der die Sprachsignale und die als Wechselstrom-Codesignale gebildeten Klingel- und Betriebssignale über die Busleitung übertragbar sind,
dadurch gekennzeichnet,
daß für die Übertragung der Sprache und der Klingel- und Betriebssignale die Türstation (TST) und alle Wohnungssprechstellen (WSPST1 bis WSPSTn) über jeweils ein Wechselstrom-Koppelglied nur wechselstrommäßig mit der einzigen Busleitung (BL) verbunden sind und
daß der Türstation (TST) und den Wohnungssprechstellen (WSPST1 bis WSPSTn) jeweils eine individuelle Gleichstromversorgung zugeordnet ist, die die Gleichstromspeisung der Einrichtungen der Türstation (TST) oder der Wohnungssprechstelle (WSPST1, WSPSTn) übernimmt.

2. Türsprechanlage nach Anspruch 1,
dadurch gekennzeichnet,
daß das Wechselstrom-Koppelglied eine Koppelkondensator (Ct, C) ist.

3. Türsprechanlage nach Anspruch 1 oder 2,
dadurch gekennzeichnet,
daß die Gleichstromversorgung einen Netztransformator (NTt, NT) mit einer nachgeschalteten Gleichrichterbrücke (BGt, BG) umfaßt.

4. Türsprechanlage nach einem der Ansprüche 1 bis 3,
dadurch gekennzeichnet,
daß in jeder Wohnungssprechstelle (WSPST1, WSPSTn) der Sprech-Hörkreis (MF, HK, V) über einen Schalter (MS) und den Koppelkondensator (C) an die Busleitung (BL) anschaltbar ist, während die Signal-Sende- und Signal-Empfangseinrichtungen über den Koppelkondensator (C) direkt mit der Busleitung (BL) verbunden sind, und
daß in der Türstation (TST) der Sprech-Hörkreis (MF, LS, Vs, Vh) über einen Schalter (St) und den Koppelkondensator (Ct) an die Busleitung (BL) anschaltbar ist, während die Signal-Sende- und Signal-Empfangseinrichtungen über den Koppelkondensator (Ct) direkt an der Busleitung angeschaltet sind.

5. Türsprechanlage nach einem der Ansprüche 1 bis 4,
dadurch gekennzeichnet,
daß beim Betätigen einer Klingeltaste (K1 ... Kn) der Türstation (TST) die Signal-Sendeeinrichtung (MCUt, SV) ein Klingelsignal aussendet, das nur in der zugeordneten Wohnungssprechstelle (WSPST1 bzw. WSPSTn) aufgenommen und zur Abgabe eines akustischen Rufsignals (W) ausgewertet wird.

6. Türsprechanlage nach Anspruch 5,
dadurch gekennzeichnet,
daß beim Melden des gerufenen Teilnehmers (Abheben des Handapparates) die Signalsendeeinrichtung (MCU, SS) der gerufenen Wohnungssprechstelle (WSPST1 bzw. WSPSTn) ein Meldesignal zur Türstation (TST) sendet,
daß die Signal-Empfangseinrichtung (MCUt, EV) der Türstation (TST) das Meldesignal aufnimmt, auswertet und über den Schalter (St) den Sprech-Hörkreis (MF, LS, Vs, Vh) mit der Busleitung (BL) verbindet und bis zum Gesprächsende aufrechthält und
daß beim Melden der Wohnungssprechstelle (WSPST1, WSPSTn) der zugeordnete Schalter (MS) den Sprech-Hörkreis (HK, MF, V) durchschaltet.

7. Türsprechanlage nach Anspruch 6,
dadurch gekennzeichnet,
daß beim Beenden des Gespräches durch den gerufenen Teilnehmer (Auflegen des Handapparates) der Schalter (MS) auslöst und die Signal-Sendeeinrichtung (MCU, SS) der auslösenden Wohnungssprechstelle (WSPST1 bzw. WSPSTn) ein Abschaltesignal zur Türstation (TST) sendet und
daß die Signal-Empfangseinrichtung (MCUt, EV) der Türstation das Abschaltesignal aufnimmt, auswertet und über den Schalter (St) den Sprech-Hörkreis (MF, LS, Vs, Vn) der Türstation (TST) von der Busleitung (BL) abschaltet.

8. Türsprechanlage nach einem der Ansprüche 1 bis 7,
dadurch gekennzeichnet,
daß jeder Wohnungssprechstelle (WSPST1, WSPSTn) eine Türöffnertaste (Tö) zugeordnet ist, mit der ein Türöffnersignal zur Türstation (TST) aussendbar ist und
daß beim Empfang des Türöffnersignals die Signal-Empfangseinrichtung (MCUt, EV) der Türstation (TST) über einen Türöffnerschalter (TÖR) den Türöffner (TÖ) für die Dauer des Türöffnersignals ansteuert.

9. Türsprechanlage nach Anspruch 8,
dadurch gekennzeichnet,
daß die Aussendung eines Türöffnersignals nur von einer angerufenen Wohnungssprechstelle (WSPST1, WSPSTn) aus einleitbar ist.

10. Türsprechanlage nach einem der Ansprüche 4 bis 9,
dadurch gekennzeichnet,
daß die Signal-Sende- und Signal-Empfangseinrichtungen der Wohnungssprechstelle (WSPST1, WSPSTn) einen Mikrocomputer (MCU), einen Signalsender (SS) und einen Signalempfänger (SE) umfassen und
daß die Signal-Sende- und Signal-Empfangseinrichtungen der Türstation (TST) einen Mikrocomputer (MCUt), einen Signalsender (SV) und Signalempfänger (EV) aufweisen.

11. Türsprechanlage nach einem der Ansprüche 1 bis 10,
dadurch gekennzeichnet,
daß im Ruhezustand der Wohnungssprechstelle (WSPST1, WSPSTn) nur die Signal-Empfangseinrichtung (SE) mit dem Mikrocomputer (MCU) an der Gleichstromversorgung angeschaltet ist, während die Signal-Sendeeinrichtung (SS) beim Aussenden eines Betriebssignals (Meldesignal, Abschaltesignal, Türöffnersignal) und der Sprech-Hörkreis (HK, MF, V) vom Aussenden des Meldesignals bis zur Abgabe des Abschaltesignals mit Gleichstrom gespeist werden.

12. Türsprechanlage nach einem der Ansprüche 1 bis 11,
dadurch gekennzeichnet,
daß im Ruhezustand der Türstation (TST) die Gleichstromversorgung für den Sprech-Hörkreis (MF, LS, Vs, Vh) und die Signal-Sendeeinrichtung (SV) und die Signal-Empfangseinrichtung (EV) sowie den Mikrocomputer (MCUt) abgeschaltet ist, während mit der Betätigung einer Klingeltaste (K1, Kn) zumindest der Mikrocomputer (MCUt), die Signal-Sendeeinrichtung (SV) auch die Signal-Empfangseinrichtung (EV) mit Gleichstrom gespeist werden.
